# EUROPÄISCHE PATENTANMELDUNG

(11) **EP 1 736 715 A1**
(43) Veröffentlichungstag der Anmeldung: **27.12.2006**
(21) Anmeldenummer: 05013591.2
(22) Anmeldetag: 23.06.2005
(51) Int. Cl.: F24J 2/05, F28F 21/02, F28F 13/00

(54) **Vakuumröhren für Solarkollektoren mit verbessertem Wärmeübergang**

(71) Anmelder: SGL CARBON AG, 65203 Wiesbaden (DE)
(72) Erfinder: Heuer, Dirk, 86150 Augsburg (DE); Zimmerly, Walter, 86154 Augsburg (DE); Guckert, Werner, 86674 Baar (DE)

(57) **Zusammenfassung**

In Vakuumröhren für Solarkollektoren lässt sich der Wärmeübergang zwischen dem Absorber (2) und den Wärmeträgerrohren (5',5'',5''',5'''') durch Einsatz von Wärmeleitelementen (9,10) aus verpresstem Graphitexpandat erleichtern. Das Wärmeleitelement (9,10) aus verpresstem Graphitexpandat kann beispielsweise als formschlüssige Zwischenschicht zwischen Absorberinnenwand und der die Wärmeträgerrohre aufnehmenden Trägerkonstruktion ausgebildet sein oder als in die Absorberröhre (2) eingepasstes Wärmeüberträgerbauteil (10), das die Wärmeträgerrohre (5',5'',5''',5'''') formschlüssig aufnimmt.

## Beschreibung

Die vorliegende Erfindung betrifft Vakuumröhren für Solarkollektoren.

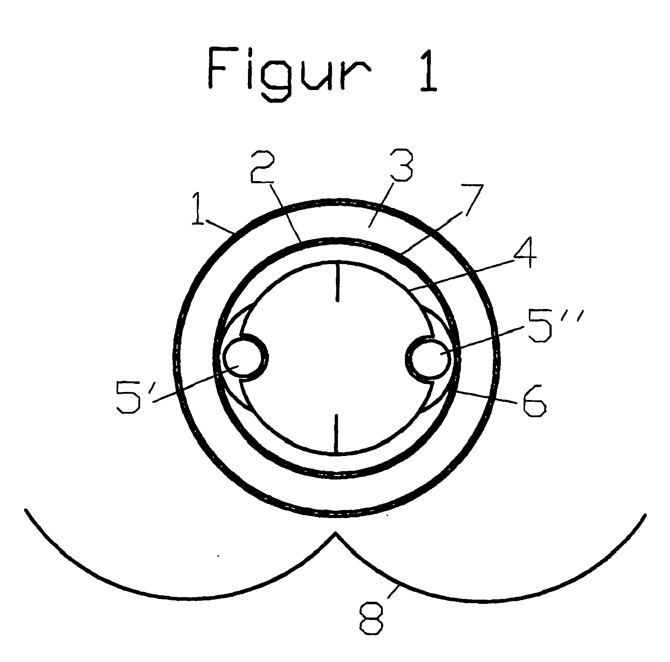

Eine bekannte Bauart von Vakuumröhren-Solarkollektoren (Figur 1) enthält sogenannte Sydney-Röhren. Es handelt sich dabei um wie eine Thennoskanne aufgebaute doppelwandige Glasgefäße, bestehend aus zwei konzentrisch ineinander geschobenen Glasröhren 1 und 2, die jeweils an einem Ende halbkugelförmig verschlossen und am anderen Ende miteinander verschmolzen sind (in der Querschnittsdarstellung von Figur 1 nicht sichtbar). Der hermetisch verschlossene Spalt 3 zwischen den Glasröhren ist zur Vermeidung von Wärmeverlusten evakuiert.
Im nicht evakuierten Innenraum der inneren Glasröhre 2 befindet sich ein in einer Trägerkonstruktion 4 gelagertes Wärmeträgerrohr, beispielsweise ein U-förmiges Rohr, das von einer Wärmeträgerflüssigkeit durchströmt wird. Die Querschnittsdarstellung in Figur 1 zeigt die beiden Schenkel 5', 5'' des U-Rohrs für den Zufluss der zu erwärmenden und den Abfluss der erwärmten Wärmeträgerflüssigkeit zum Wärmetauscher bzw. -speicher. Meist enthält die Trägerkonstruktion 4 Wärmeleitbleche 6 aus Aluminium oder Kupfer, in welche die üblicherweise aus Kupfer oder Messing bestehenden Wärmeträgerrohre eingebettet oder eingefalzt sind.
Neben der U-förmigen Rohrführung sind auch andere Arten der Ausführung und
Funktionsweise des Wärmeträgerrohrs bekannt. Beispielsweise kann die Wänneträgerflussigkeit die Kollektorröhre der Länge nach durchströmen, dann ist das Wanneträgerrohr am oberen und am unteren Ende der Kollektorröhre offen. Der Vorlauf befindet sich in einem Sammelkasten am unteren Rohrende, und am oberen Rohrende befindet sich ein Sammelkasten für den Rücklauf
Das Wärmeträgerrohr kann auch koaxial durchströmt werden. In diesem Fall besteht das Wärmeträgerrohr aus zwei koaxial ineinander angeordneten Rohren, wobei das offene Ende des inneren Koaxialrohres (Wärmezuleitungsrohr) vom geschlossenen Ende des äußeren Koaxialrohrs überragt wird. Eine solche Führung der Wärmeträgerflüssigkeit wird beispielsweise in der Patentschrift DE 198 21 137 beschrieben.
Daneben ist es auch bekannt, anstelle eines von einer Wärmeträgerflüssigkeit durchströmten Rohres eine sog, heat-pipe (Wärmerohr) vorzusehen, in welcher sich eine durch die absorbierte Wärme verdampfende Flüssigkeit befindet. Der Flüssigkeitsdampf steigt im Wärmerohr auf und gibt die aufgenommene Wärme über einen Wärmetauscher ab. Die kondensierte Flüssigkeit fließt anschließend wieder an das untere Ende des Wärmerohrs zurück, Damit der beschriebene Verdampfungs- und Kondensierungsprozess ablaufen kann, müssen die Röhren mit einer Mindestneigung von der Horizontalen aufgebaut sein
Die innere Glasröhre (Absorberröhre) 2 ist auf ihrer dem Vakuumspalt zugewandten Oberfläche mit einer selektiven Absorberschicht 7 beispielsweise aus Aluminiumnitrid versehen. Ein hinter den Kollektorröhren angeordneter hochreflektierender Spiegel 8 bewirkt, dass die Sonnenstrahlung auch die Rückseite der zylindrischen Absorberröhre erreicht.
Aus der auftreffenden Sonnenstrahlung wird in der Absorberschicht 7 Wärme absorbiert. Über die Wärmeleitbleche 6 wird die Wärme auf die Wärmeträgerrohre übertragen. Die erwärmte Wärmeträgerflüssigkeit strömt zu einem Wärmetauscher, in welchem die Wärme zur weiteren Nutzung ausgekoppelt wird.
In diesen Solarkollektor-Vakuumröhren nach dem Stand der Technik ist der Wärmeübergangswiderstand zwischen der Absorberröhre 2 und den Wärmeträgerrohren relativ hoch, denn in den bekannten Trägerkonstruktionen 4 mit Wärmeleitblechen 6 steht nur eine relativ begrenzte Kontaktfläche für die Wärmeübertragung zur Verfügung. Zwischen metallischen Bauteilen bzw. Metall und Glas lässt sich wegen der Starrheit dieser Materalien und stets vorhandener Unebenheiten und Unregelmäßigkeiten an den Oberflächen kein lückenloser Formschluss realisieren, so dass stets isolierende Luftbrücken vorhanden sind. Darüber hinaus ist im Laufe der Standzeit des Kollektors wegen zunehmender Materialermüdung aufgrund des häufigen Durchlaufens von temperaturbedingten Expansions- und Kontraktionszyklen eine zunehmenden Degradation des Formschlusses zu erwarten.
Ein weiteres Problem ist die unterschiedliche thermische Ausdehnung von Kupfer und Aluminium, wenn Wärmeleitbleche aus Aluminium und Wärmeträgerrohre aus Kupfer verwendet werden.

Erfindungsgemäß wird vorgeschlagen, zur Erleichterung des Wärmeübergangs zwischen der Absorberröhre 2 und den Wärmeträgerrohren Wärmeleitelemente aus verpresstem Graphitexpandat einzusetzen. Graphitexpandat zeichnet sich sowohl durch eine hohe Wärmeleitfähigkeit als auch durch eine leichte Formbarkeit und hervorragende Anpassung an benachbarte Oberflächen aus. Daher lässt sich mittels verpresstem Graphitexpandat ein nahezu lückenloser vollflächiger Formschluss zwischen den wärmeübertragenden Bauteilen erreichen.
Erfindungsgemäß wird in der inneren Glasröhre 2 ein Wärmeleitelement aus verpresstem Graphitexpandat angeordnet mit vollflächigen Formschluss einerseits an den Berührungsflächen des Wärmeleitelements mit der Innenwand der inneren Glasröhre 2 und andererseits zu den Wärmeträgerrohren und ggf. einer die Wärmeträgerxohre aufnehmenden Trägerkonstruktion. Die Erfindung ist dabei nicht an eine bestimmte Art der Rohrführung des Wärmeträgermediums gebunden, sie eignet sich sowohl für U-förmige als auch von unten nach oben durchströmte als auch koxiale Wärmeträgerrohre oder heat-pipes oder Kombinationen davon. Daher wird im folgenden der allgemeine Begriff Wärmeträgerrohre verwendet, sofern nicht auf eine spezielle Rohranordnung Bezug genommen wird.
Aufgrund des vollflächigen Formschlusses zwischen der Innenwand der inneren Glasröhre 2 und dem Wärmeleitelement aus expandiertem Graphit gibt es in der erfindungsgemäßen Anordnung im Gegensatz zum Stand der Technik keine Reibungspunkte zwischen Glas und Metall. Dadurch werden Beschädigungen der Glasröhre vermieden.
Die thermische Ausdehnung des expandierten Graphits ist minimal, daher ist im Laufe der Standzeit des Solarkollektors keine signifikante Materialermüdung des Wärmeleitelements zu erwarten.
Das Wärmeleitelement aus verpresstem Graphitexpandat kann beispielsweise als formschlüssige Zwischenschicht zwischen Absorberinnenwand und der die Wärmeträgerrohre aufnehmenden Trägerkonstruktion ausgebildet sein oder als in die Absorberröhre eingepasstes
Wärmeüberträgerbauteil, d.h. als Formteil, das die Wärmeträgerrohre formschlüssig aufnimmt und die Trägerkonstruktion mit den Wärmeleitblechen ersetzt.

Weitere Vorteile, Details und Varianten der Erfindung gehen aus der folgenden ausführlichen Beschreibung und den Figuren hervor.

### Die Figuren zeigen

- Figur 1: Querschnitt eines Sydney-Vakuumröhrenkollektors mit Wärmeleitblechen nach dem Stand der Technik mit U-Rohr für die Wärmeträgerflüssigkeit
- Figur 2: Querschnitt eines Sydney-Vakuumröhrenkollektors gemäß einer ersten Variante der Erfindung mit einer Zwischenschicht aus Graphitfolie
- Figur 3: Querschnitt eines Sydney-Vakuumröhrenkollektors gemäß einer zweiten Variante der Erfindung mit einem Wärmeüberträgerbauteil aus expandiertem Graphit
- Figur 4: Quer- und Längsschnitt einer Sydney-Vakuuumröhre gemäß der zweiten Variante der Erfindung mit einem in das Wärmeüberträgerbauteil eingebetteten Koaxialrohr
- Figur 5: Quer- und Längsschnitt einer Sydney-Vakuuumröhre gemäß der zweiten Variante der Erfindung mit einer in das Wärmeüberträgerbauteil eingebetteten heatpipe
- Figur 6: ein erfindungsgemäßes Wärmeüberträgerbauteil mit abgewandeltem Querschnitt

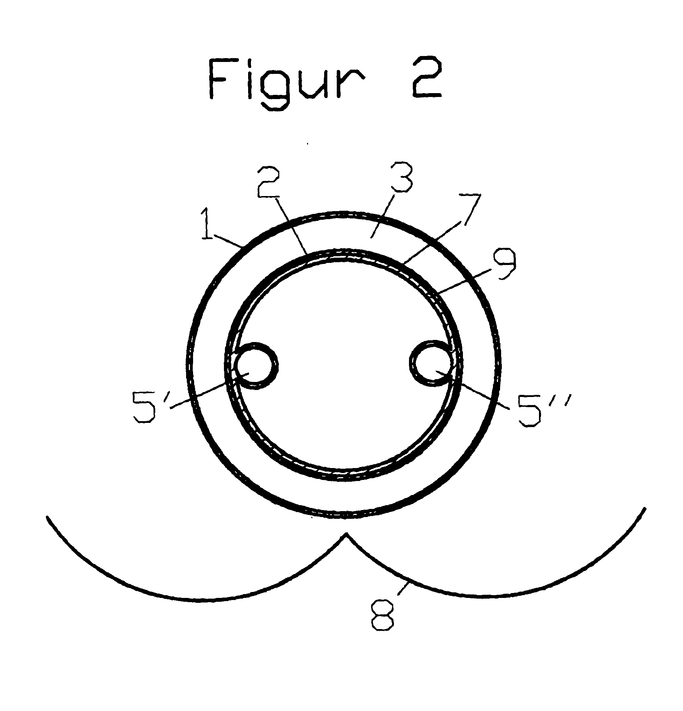

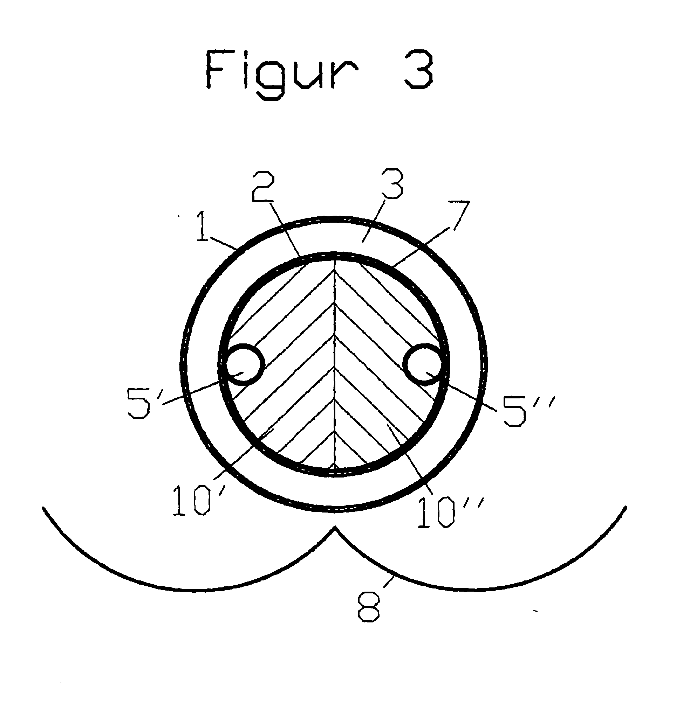

In den Figuren 2 und 3 werden die beiden prinzipiellen Varianten die Erfindung beispielhaft anhand eines Sydney-Kollektors mit U-förmigem Wärmeträgerrohr 5', 5" dargestellt, sie sind jedoch nicht darauf beschränkt. Alternativ kann die Wärmeträgerflüssigkeit auch durch ein Koaxialrohr oder ein von unten nach oben durchströmtes Rohr geführt werden, oder es wird eine heatpipe benutzt.

In einer ersten Variante der Erfindung (Figur 2) wird die Trägerkonstruktion mit den Wärmeträgerrohren an ihrer der Innenwand der Absorberröhre 2 zugewandten Oberfläche mit Graphitfolie umwickelt, welche einen formschlüssigen wärmeleitenden Kontakt zwischen der Absorberröhre 2 und den Wärmeträgerrohren herstellt. Die Trägerkonstruktion selbst ist der Übersicht halber in Figur 2 nicht dargestellt. Wärmeleitbleche werden hier nicht mehr benötigt, so dass das Gewicht der Kollektorröhre vermindert wird.
Aus der Dichtungstechnik ist bekannt, dass Graphitfolie sich leicht an die abzudichtenden Oberflächen anpasst und dadurch Unebenheiten oder andere Unregelmäßigkeiten in der Oberfläche von Flanschen ausgleicht, In der vorliegenden Erfindung passt sich die Graphitfolie 9 genau den anschließenden Oberflächen der Trägerkonstruktion und der Wärmeträgerrohre einerseits und der Innenwand der inneren Glasröhre 2 andererseits an und kompensiert so vorhandene Unregelmäßigkeiten dieser Oberflächen. Dadurch wird der Wärmeübergang erleichtert.
Hinsichtlich der Dicke ist eine Graphitfolie auszuwählen, die einerseits ausreichend reißfest, andererseits ausreichend flexibel ist so dass sie gewickelt werden kann. Geeignete Graphitfolie hat eine Dicke zwischen 0,1 und 1 mm, bevorzugt bis 0,5 mm, und eine Dichte zwischen 0,5 und 1,5 g/cm³.

In einer weiteren Variante der Erfindung (Figuren 3-5) wird die Trägerkonstruktion aus Wärmeleitblechen, welche die Wärmeträgerrohre aufnimmt, durch ein Formteil aus verpresstem Graphitexpandat substituiert. Dieses wird im folgenden als Wärmeüberträgerbauteil 10 bezeichnet. Die erfindungsgemäßen Wärmeüberträgerbauteile 10 haben eine im wesentlichen zylindrische Gestalt mit Aussparungen für die Aufnahme der Wärmeträgerrohre. Das Wärmeüberträgesbauteil 10 ist so dimensioniert, dass sich seine Umfangsfläche zumindest teilweise formschlüssig an die Innenwand der inneren Glasröhre 2 (Absorberröhre) anschließt. Die Wärmeträgerrohre, in Figur 3 beispielhaft als U-Rohr 5', 5" dargestellt, wiederum werden formschlüssig von dem Wärmeüberträgerbauteil 10 aus verpresstem Graphitexpandat aufgenommen.
Das Wärmeüberträgerbauteil 10 kann als einstückiges Formteil ausgebildet sein, aus fertigungstechnischen Gründen ist es jedoch, wie in den Figuren 3-5 dargestellt, bevorzugt aus zwei Halbformteilen 10' und 10" zusammengesetzt.

Die folgenden Figuren zeigen dieselbe Variante der Erfindung mit anderen Arten von Wärmeträgerrohren.

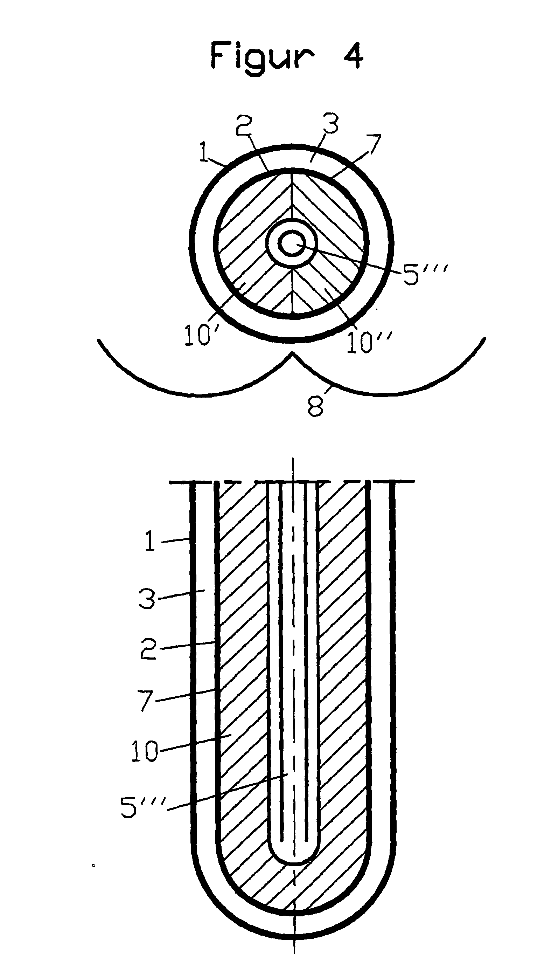

Figur 4 zeigt im Quer und Längsschnitt eine doppelwandige Glasröhre 1, 2, in welcher die Wärmeträgerflüssigkeit durch ein Koaxialrohr 5''' geführt wird. Das Kaxialrohr ist zwischen den beiden Halbformteilen 10', 10", deren aneinander stoßende Oberflächen entsprechende Aussparungen aufweisen, formschlüssig eingebettet.

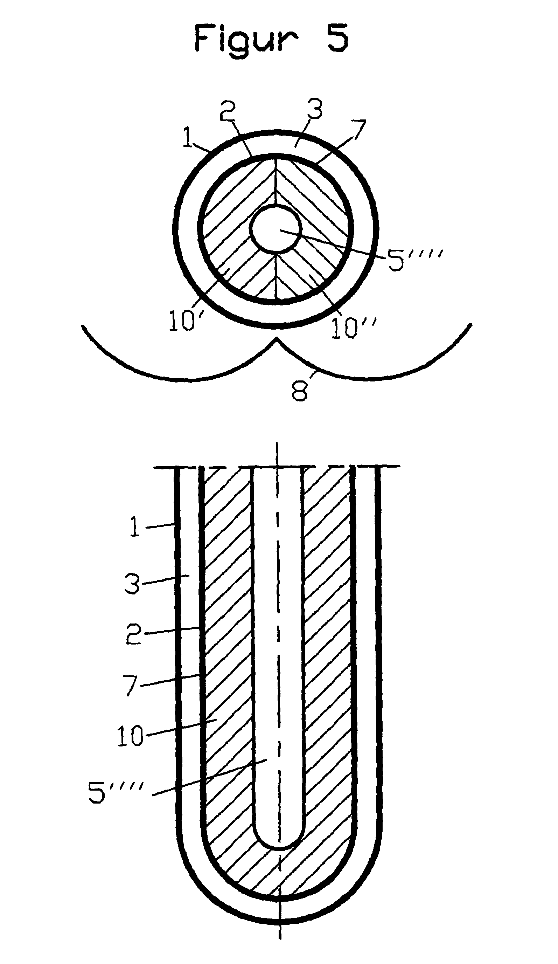

Figur 5 zeigt als weitere Alternative im Quer- und Längsschnitt eine doppelwandige Glasröhre 1, 2, in welcher die Wärmeträgerflüssigkeit durch eine heat-pipe 5'''' geführt wird. Die heat-pipe ist zwischen den beiden Halbformteilen 10', 10'', deren aneinander stoßende Oberflächen entsprechende Aussparungen aufweisen, formschlüssig eingebettet.
Ebenso kann ein von unten nach oben durchströmtes Wärmeträgerrohr formschlüssig zwischen den beiden das Wärmeträgerbauelement 10 bildenden Halbformteilen 10', 10" eingebettet werden, oder Kombinationen von verschiedenartigen Wärmeträgerrohren.

Da Graphitexpandat sich durch eine hohe Anpassungsfähigkeit an benachbarte Oberflächen auszeichnet, ist ein formschlüssiger Verbund und damit ein geringer Wärmeübergangswiderstand zur Innenwand der inneren Glasröhre 2 einerseits und zu den Wärmeträgerrohren andererseits gewährleistet, Dadurch wird der Wärmeübergang erleichtert, und der Wärmeübergangswiderstand sinkt.
Außerdem wird durch den Formschluss des Wärmeüberträgerbauteils 10 mit der inneren Glasröhre 2 und den Wärmeträgerrohren die Stabilität des gesamten Aufbaus der Vakuumröhre erhöht.
Darüber hinaus eliminiert dieser erfindungsgemäße Aufbau das Problem der unterschiedlichen thermischen Ausdehnungen von Kupfer und Aluminium. Das Wärmeüberträgerbauteil 10 aus verpresstem Graphitexpandat besitzt aufgrund seiner Porosität eine Kompressionsreserve, so dass die thermische Ausdehnung des Kupferrohrs kompensiert werden kann, Ein weiterer Vorteil dieser Variante der Erfindung besteht in der Gewichtsreduzierung, da das Formteil 10 aus verpresstem Graphitexpandat wesentlich leichter ist als die herkömmliche metallische Trägerkonstruktion.

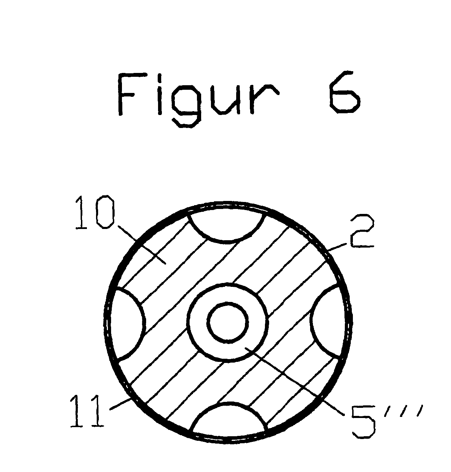

Die Herstellung von Graphitexpandat und Graphitfolie ist bekannt. Graphiteinlagerungsverbindungen (Graphitsalze), z.B. Graphithydrogensulfat oder Graphitnitrat, werden schockartig in einem Ofen oder mittels Mikrowellen erhitzt. Dabei vergrößert sich das Volumen der Partikel um den Faktor 200 bis 400, und die Schüttdichte sinkt auf 2 bis 20 g/l. Das so erhaltene Graphitexpandat besteht aus wurm- oder ziehharnionikaförmigen Aggregaten. Bei Verdichtung verhaken sich die einzelnen Aggregate untereinander zu einem festen Verbund, so dass ohne Binderzusatz selbsttragende Flächengebilde, zB. Folien oder Bahnen, oder Formkörper, z.B. Platten, hergestellt werden können.
Eine weitere aus dem Stand der Technik bekannte Methode zur Herstellung von dreidimensionalen Formkörpern aus Graphitexpandat besteht darin, die thermische Expansion der Graphiteinlagerungsverbindung bzw. des Graphitsalzes in einem entsprechend ausgelegten Formwerkzeug durchzuführen. Dabei ist zu beachtea, dass das Formwerkzeug das Entweichen von Gasen zulassen muss. Wegen der aufwändigea Werkzeugauslegung ist diese Methode für die Herstellung der Formteile für die vorliegenden Erfindung jedoch nicht bevorzugt.
Stattdessen hat sich eine Methode bewährt, nach der zunächst Graphitexpandat in bekannter Weise zu einer Platte passender Dicke, typischerweise zwischen 5 und 50 mm, verpresst wird und aus dieser Platte Rohlinge ausgeschnitten werden, welche dann in einem Werkzeug in die gewünschte Form gepresst werden. Die im wesentlichen zylinderförmigen Formteile können einstückig sein oder durch Aneinanderlegen von zwei einzeln nach dieser Methode gefertigten halbzylindrischen Formteilen gebildet werden.
Die Dichte des Graphitexpandats in diesen Formteilen liegt im Bereich zwischen 0,02 und 0,5 g/cm³.
Alternativ können die Formteile auch durch Formextcudieren aus vorgefertigten Platten hergestellt werden.
Soll das Wärmeüberträgerbauteil in eine bereits mit Wärmeträgerrohren versehene Vakuumröhre eingesetzt werden, so müssen im Formteil Aussparungen für die Aufnahme der Wärmeträgerrohre oder der heat-pipe vorgesehen werden. Dank der leichten Bearbeitbarkeit von Presslingen aus Graphitexpandat lassen die Aussparungen sich ohne Schwierigkeiten in das Formteil einpressen oder aus ihm herausschneiden. Das Formteil wird anschließend von deren offenem Ende aus in die Vakuumröhre hinein geschoben, wobei die Wärmeträgerrohre in die dafür vorgesehenen Aussparungen gleiten.
In einer anderen Ausführungsform der Erfindung wird ein komplettes Bauteil hergestellt umfassend das Wärmeträgerrohr und das aus Graphitexpandat gepresste Wärmeträgerbauteil. Dazu wird das Wärmeträgerrohr einfach in das Formteil, das ggf. aus zwei aneinander gelegten Halbformteilen besteht, hinein gepresst bzw. zwischen den beiden Halbformteilen eingebettet, so dass es formschlüssig aufgenommen wird.
Mit einem zylindrischen Wärmeüberträgerbauteil, das an seinem gesamten Umfang den Innenabmessungen der Absorberröhre 2 entspricht, wird die Erfindung optimal verwirklicht wegen des vollflächigen Formschlusses über die gesamte verfügbare Innenwandfläche der Absorberröhre 2. Grundsätzlich sind auch Abweichungen von der zylindrischen Form denkbar, beispielsweise durch Aussparungen oder Einbuchtungen am runden Querschnitt des Zylinders. In diesen Bereichen besteht dann kein Formschluss zur Innenwand der Absorberröhre, der vollflächige Formschluss ist auf die Berührungsflächen des Wärmeüberträgerbauteils 10 mit der Innenwand der Absorberröhre 2 begrenzt. Letztendlich hängt es vom konkreten Anwendungsfall ab und ist vom Fachmann zu entscheiden, welcher Querschnitt des Wärmeüberträgerbauteils 10 gewählt wird, wobei die Wirkungsgradverluste bei verringerter Berührungsfläche zwischen Wärmeträgerbauteil 10 und Absorberröhre 2 einerseits und die durch Abweichungen von der Zylinderform andererseits möglichen Materialeinsparungen in Betracht zu ziehen sind.
Da also Abweichungen von der Zylinderform möglich sind, sollen im Sinne dieser Erfindung unter "im wesentlichen zylinderförmig" Formteile verstanden werden mit einer Geometrie, die man als von einem Zylinder abgeleitet betrachten kann, derart, dass sein ursprünglich runder Querschnitt mit Einbuchtungen oder Aussparungen versehen ist, so dass die Umfangsfläche dieses Gebildes nur noch in begrenzten Bereichen der Umfangsfläche eines Zylinders entspricht. Diese Bereiche bilden die Berührungsflächen zwischen dem Wärmeleitelement 10 und der Innenwand der inneren Glasröhre 2, und an diesen Berührungsflächen ist der Fonnschluss vollflächig.
Ein Beispiel für eine solche von der Zylinderform abweichende Gestalt des Formteils 10, hier mit eingebettetem Koaxialrohr 5''', zeigt Figur 6. Der formschlüssige Kontakt zur Absorberröhre 2 (die äußere Röhre 1 wurde der Einfachheit halber in der Darstellung weggelassen) beschränkt sich auf die Berührungsflächen 11, ist in diesen Bereichen jedoch aufgrund der hohen Anpassungsfähigkeit des verpressten Graphitexpandats nahezu vollflächig.

Die beiden erfindungsgemäßen Varianten gemäß Figur 2 und 3 - Graphitfolie 9 an der Innenseite der Absorberröhre 2 und Aufnahme der Wärmeträgerrohre in einem Formteil 10 aus verpresstem Graphitexpandat - können auch kombiniert werden, so dass die Wärmeträger-, rohre durch ein Formteil aus Graphitexpandat 10 aufgenommen werden, das seinerseits mit Graphitfolie 9 umwickelt ist.

In einer weiteren Variante der Erfindung wird anstelle der dem Vakuumspalt zugewandten Oberfläche der inneren Glasröhre 2 die der Innenwand der inneren Glasröhre 2 zugewandte Oberfläche des Wärmeüberträgerbauteils 10 mit einer Absorberschicht versehen. Diese Variante hat den Vorteil, dass der Wärmeübergang durch die Glaswand der Röhre 2 entfällt.

Für den Einsatz in Gegenden mit starker Sonneneinstrahlung, z.B. in südeuropäischen oder afrikanischen Ländern kann auch völlig auf die Absorptionsschicht 7 verzichtet und die Absorptionswirkung des Graphits genutzt werden. Damit verbundene Wirkungsgradeinbußen werden durch Einsparungen bei den Material- und Herstellungskosten kompensiert, was den Einsatz auch in ärmeren Ländern, von denen sich viele in Erdteilen mit starker Sonneneinstrahlung befinden, begünstigt.

## Patentansprüche

1. Solarkollektor-Vakuumröhre aus zwei konzentrisch ineinander geschobenen Glasröhren (1, 2), die jeweils an einem Ende halbkugelförmig verschlossen und am anderen Ende miteinander verschmolzen sind, wobei der Spalt (3) zwischen den Glasröhren (1) und (2) evakuiert ist, mit mindestens einem von einem Wärmeträgermedium durchströmten Rohr (5', 5'', 5''', 5''') im Innenraum der inneren Glasröhre (2) und optional einer Absorberschicht (7) an der dem Vakuumspalt (3) zugewandten Oberfläche der inneren Glasröhre (2),
**dadurch gekennzeichnet, dass**
in der inneren Glasröhre (2) ein Wärmeleitelement (9, 10) aus verpresstem Graphitexpandat angeordnet ist mit vollflächigem Formschluss einerseits an den Berührungsflächen des Wärmeleitelements mit der Innenwand der inneren Glasröhre (2) und andererseits zu den Wärmeträgerrohren (5', 5'', 5''', 5''') bzw. einer die Wärmeträgerrohre (5', 5'', 5''', 5''') aufnehmenden Trägerkonstruktion (4).

2. Solarkollektor-Vakuumröhre gemäß Anspruch, **dadurch gekennzeichnet, dass**
die vom Wärmeträgermedium durchströmten Rohre als U-förmige (5', 5''), als von unten nach oben durchströmte, als koxiale Wärmeträgerrohre (5''') oder heat-pipes (5'''') oder Kombinationen davon ausgebildet sind.

3. Solarkollektor-Vakuumröhre nach Anspruch 1, **dadurch gekennzeichnet, dass**
das Wärmeleitelement durch Graphitfolie (9) gebildet wird, die um die die Wärmeträgerrohre (5', 5", 5''', 5"") aufnehmende Trägerkonstruktion (4) gewickelt ist und formschlüssig an die Innenwand der inneren Glasröhre (2) anschließt.

4. Solarkollektor-Vakuumröhre nach Anspruch 3, **dadurch gekennzeichnet, dass**
die Graphitfolie (9) eine Dicke zwischen 0,1 und 1 mm und eine Dichte zwischen 0,5 und 1,5 g/cm³ aufweist.

5. Solarkollektor-Vakuumröhre nach Anspruch 1, **dadurch gekennzeichnet, dass**
die Wärmeträgerrohre (5', 5", 5''', 5'''') formschlüssig von einem Wärmeträgerbauteil (10) aus verpresstem Graphitexpandat aufgenommen werden, an dessen Berührungsflächen mit der Innenwand der inneren Glasröhre (2) ein fonnschlüssiger Verbund zwischen dem Wäriaeleitelement (10) und der Innenwand der inneren Glasröhre (2) vorliegt.

6. Solarkollektor-Vakuumröhre nach Anspruch 5, **dadurch gekennzeichnet, dass**
das Wärmeüberträgerbauteil (10) aus zwei Halbformteilen (10', 10") zusammengesetzt ist.

7. Solarkollektor-Vakuumröhre nach Anspruch 5, **dadurch gekennzeichnet, dass**
die Dichte des Graphitexpandats im Wärmeüberträgerbauteil (10) zwischen 0,02 und 0,5 g/cm³ liegt.

8. Solarkollektor-Vakuumröhre nach Anspruch 5, **dadurch gekennzeichnet, dass**
die der Innenwand der inneren Glasröhre (2) zugewandte Oberfläche des Wärmeüberträgerbauteils (10) mit einer Absorberschicht versehen ist.

9. Solarkollektor-Vakuumröhre nach Anspruch 1, **dadurch gekennzeichnet, dass**
die Wärmeträgerrohre (5', 5'', 5''', 5'''') formschlüssig von einem Wärmeüberträgerbauteil (10) aus verpresstem Graphitexpandat aufgenommen werden, das mit Graphitfolie (9) umwickelt ist, die sich formschlüssig an die Innenwand der inneren Glasröhre (2) anschließt.

10. Verwendung von verpresstem Graphitexpandat zur Wärmeübertragung in Vakuumröhren-Solarkollektorea.

11. Wärmeüberträgerbauteil für einen Vakuumröhren-Solarkollektor, umfassend ein im wesentlichen zylindrisches Formteil (10) aus verpresstem Graphitexpandat, das die Wärmeträgerrohre (5', 5'', 5''', 5'''') formschlüssig aufnimmt, und dessen Umfangsfläche Bereiche aufweist, die als Berührungsflächen einen formschlüssigen Verbund zur Innenwand der inneren Glasröhre (2) der Vakuumröhre herstellen.

12. Wärmeüberträgerbauteil nach Anspruch 11, **dadurch gekennzeichnet, dass**
in dem Formteil (10) aus verpresstem Graphitexpandat Aussparungen für die formschlüssige Aufnahme der Wätmeträgerrohre (5', 5'',5''',5'''') vorgesehen sind.

13. Wärmeüberträgerbauteil nach Anspruch 11, **dadurch gekennzeichnet, dass**
in dem Formteil (10) aus verpresstem Graphitexpandat Wärmeträgerrohre (5', 5'',5''',5'''') formschlüssig eingebettet sind.

14. Wärmeüberträgerbauteil nach Anspruch 11, **dadurch gekennzeichnet, dass**
das Formteil (10) aus zwei Halbformteilen (10', 10'') zusammengesetzt ist.

15. Wärmeüberträgerbauteil nach Anspruch 11, **dadurch gekennzeichnet, dass**
die Dichte des Graphitexpandats im Formteil (10) zwischen 0,02 und 0,5 g/cm³.

16. Wärmeüberträgerbauteil nach Anspruch 11, **dadurch gekennzeichnet, dass**
die der Innenwand der inneren Glasröhre (2) zugewandte Oberfläche des Wärmeüberträgerbauteils (10) mit einer Absorberschicht versehen ist
